# EUROPÄISCHE PATENTSCHRIFT

(11) **EP 3 336 500 B1**
(45) Veröffentlichungstag und Bekanntmachung des Hinweises auf die Patenterteilung: **20.01.2021**
(21) Anmeldenummer: 16204005.9
(22) Anmeldetag: 14.12.2016
(51) Int. Cl.: G01K 17/08, G01K 17/20

(54) **ELEKTRONISCHES GERÄT UND VERFAHREN ZUR HYBRIDEN WÄRME- UND KÄLTEMENGENVERTEILUNG ÜBER STANDARDHEIZFLÄCHEN**
ELECTRONIC APPARATUS AND METHOD FOR HYBRID HEATING AND COOLING AGENT DISTRIBUTION OVER STANDARD HEATING SURFACES
APPAREIL ÉLECTRONIQUE ET PROCÉDÉ DE DISTRIBUTION DE QUANTITÉ DE CHAUD ET FROID PAR L'INTERMÉDIAIRE DE SURFACES CHAUFFANTES STANDARDS

(43) Veröffentlichungstag der Anmeldung: 20.06.2018
(73) Patentinhaber: METRONA Union GmbH, 81379 München (DE); Westsächsische Hochschule Zwickau, 08056 Zwickau (DE)
(72) Erfinder: SCHRÖDER, Franz, 82054 Sauerlach (DE); PAPERT, Olaf, 94526 Berg-Metten (DE); TEICH, Tobias, 08496 Neumark (DE); SCHARF, Oliver, 08053 Zwickau (DE); KRETZ, Daniel, 09350 Lichetstein (DE)
(74) Vertreter: Prinz & Partner mbB

(56) Entgegenhaltungen:
- EP-A1- 1 746 556
- DE-A1- 4 122 848
- DE-B3-102005 027 820
- US-A- 4 482 006

## Beschreibung

Die Erfindung betrifft ein elektronisches Gerät, insbesondere einen normgerechten Heizkostenverteiler, zur Erfassung von Raumklimadaten in einem mit einer Heiz-/Kühlfläche ausgestattetem Raum. Die Erfindung betrifft ferner ein Verfahren zur Erfassung und Verwendung von Raumklimadaten mithilfe eines solchen elektronischen Geräts.

Elektronische Heizkostenverteiler, die der europäischen Norm DIN EN 834 entsprechen, sind ebenso bekannt wie Einrichtungen zur Feuchte- und Temperaturmessungen innerhalb von Wohn- und Gewerbeumgebungen.

Aus DE 41 22 848 A1 ist ein elektronisches Gerät in Form eines Heizkostenverteilers zur Erfassung von Raumklimadaten in einem mit einer Heizfläche ausgestattetem Raum und ein Verfahren zur Erfassung und Verwendung von Raumklimadaten mithilfe des Heizkostenverteilers bekannt. Der Heizkostenverteiler umfasst ein Rückenteil zur Anbringung des Heizkostenverteilers an einer Heizfläche, ein vorderes Gehäuseteil, das im angebrachten Zustand des Geräts in den Raum hineinragt, eine Temperaturmesseinrichtung mit einem am Rückenteil angeordneten ersten Temperatursensor zur Messung einer ersten Temperatur und einem im vorderen Gehäuseteil angeordneten zweiten Temperatursensor zur Messung einer zweiten Temperatur, sowie eine Auswerteeinheit. Bei den durch die Temperaturregelung des Heizkörpers bedingten Unterbrechungen des Durchflusses des Heizmittels durch den Heizkörper wird aus den von den Temperatursensoren gemessenen Temperaturwerten die Abkühlgeschwindigkeit des Heizkörpers bestimmt, und der die Wärmeabgabe des Heizkörpers darstellende Momentanwert wird aus der funktionalen Abhängigkeit von der solchermaßen bestimmten Abkühlgeschwindigkeit und einem der Gesamtwärmekapazität des Heizkörpers entsprechenden vorgegebenen Wert gebildet. Durch die Messung der Energieabgabe des zu messenden Heizkörpers bei seiner Abkühlung nach einer Unterbrechung des Durchflusses des Heizmittels kann die die Wärmeabgabe des Heizkörpers mit der Heizkörpertemperatur und der Raumtemperatur in Beziehung setzende funktionale Abhängigkeit für alle Betriebszustände des Heizkörpers bestimmt werden.

In der DE 10 2005 027 820 B3 wird zur Unterdrückung der Einflüsse von Fremdwärmequellen vorgeschlagen, einem Heizkostenverteiler ein "Erinnerungsvermögen" im Hinblick auf Fremderwärmung zu geben. Während eines erkannten Fremderwärmungszustands wird ein Hilfszähler heraufgezählt. Bei Erkennen einer Abkühlphase des Raumtemperatursensors im Anschluss an einen Fremderwärmungszustand wird der Hilfszähler heruntergezählt. Ein Anzeigefortschritt ist bei diesem Heizkostenverteiler erst dann durchführbar, wenn der Hilfszähler den Wert Null erreicht hat.

Ein elektronisches Gerät mit den Merkmalen des Oberbegriffs des Anspruchs 1 ist aus der US 4 482 006 A bekannt. Das Gerät ist zur Überwachung der von einer einzelnen Wohneinheit eines Mehrfamilienhauses verbrauchten Wärmeenergie vorgesehen und gehört zu einem Überwachungssystem, das auf die Temperaturniveaus in der Wohneinheit und eines Wärmetauschers in der Wohneinheit anspricht. Das Überwachungssystem umfasst eine Schaltung mit einem Temperaturmesskreis zur Überwachung der Temperaturniveaus. Eine Aufzeichnungs- und Anzeigeschaltung ist elektrisch mit dem Temperaturmesskreis gekoppelt, um eine Aufsummierung und Ablesung der akkumulierten Temperaturniveaus innerhalb der Wohneinheit während eines Überwachungsintervalls zu ermöglichen.

Aus der EP 1 746 556 A1 ist ein Heizkostenverteiler bekannt, der Sensoren zur Bestimmung der Feuchte und des Taupunktes umfasst.

Es ist Aufgabe der Erfindung, erweiterte und mehrfache Funktionalitäten auf der Basis klassischer elektronischer Heizkostenverteiler bereitzustellen, die über dessen ursprüngliche Zweckbestimmung gemäß DIN EN 834 hinausgehen, ohne den wirtschaftlichen Aufwand für Gestellung und den Betrieb solcher elektronischen Heizkostenverteiler wesentlich erhöhen zu müssen.

Gelöst wird diese Aufgabe durch ein elektronisches Gerät mit den Merkmalen des Anspruchs 1 sowie durch ein Verfahren mit den Merkmalen des Anspruchs 10. Vorteilhafte und zweckmäßige Ausgestaltungen des erfindungsgemäßen Geräts und des erfindungsgemäßen Verfahrens sind in den zugehörigen Unteransprüchen angegeben.

Das erfindungsgemäße elektronische Gerät zur Erfassung von Raumklimadaten in einem mit einer Heiz-/Kühlfläche ausgestattetem Raum umfasst ein Rückenteil zur Anbringung des Geräts an einer Raumwand oder der Heiz-/Kühlfläche und ein vorderes Gehäuseteil, das im angebrachten Zustand des Geräts in den Raum hineinragt. Das erfindungsgemäße elektronische Gerät umfasst ferner eine Temperaturmesseinrichtung mit einem am Rückenteil angeordneten ersten Temperatursensor zur Messung einer ersten Temperatur und einem im vorderen Gehäuseteil angeordneten zweiten Temperatursensor zur Messung einer zweiten Temperatur. Das erfindungsgemäße elektronische Gerät umfasst des Weiteren eine Auswerteeinheit. Das elektronische Gerät ist so eingerichtet, dass die Auswerteeinheit mithilfe der Temperaturmesseinrichtung nur bei einem Kühlbetrieb der Heiz-/Kühlfläche, bei dem die Heiz-/Kühlfläche von einem Kühlmittel durchflossen wird und die Differenz zwischen der vom zweiten Temperatursensor und der vom ersten Temperatursensor gemessenen Temperatur größer 1 K ist (TL-TH > 1 K), die anfallenden Wärmeabsorptionseinheiten zählt bzw. errechnet und aufintegriert. Diese Wärmeabsorptionseinheiten sind zu einer Funktion der Differenz zwischen den gemessenen Temperaturen proportional (dE ∼ f(TL-TH)). Wärmeabsorptionseinheiten sind in diesem Zusammenhang gleichzusetzen mit "Kälteabgabeeinheiten".

Hauptziel der Erfindung ist es, das erfindungsgemäße elektronische Gerät, das insbesondere einem herkömmlichen elektronischen Heizkostenverteiler entsprechen kann, in klassischen Heizanlagensystemen, die zukünftig in zunehmendem Maße für den Hybridbetrieb, d. h. saisonabhängig für Heizbetrieb wie auch Kühlbetrieb ausgelegt sein sollen, sowohl für eine nachgeordnete Heizkosten- als auch eine "Kühlkostenverteilung" verwenden zu können. Das erfindungsgemäße elektronische Gerät wird deshalb nachfolgend auch abgekürzt als "HKKV" - für "Heiz- und Kältekostenverteiler" - bezeichnet.

Die Erfindung beruht insgesamt auf den nachfolgend erläuterten Erkenntnissen: Vor dem Hintergrund mitteleuropäischer Entwicklungen bezüglich Klimawandel und Demographie werden zunehmend mildere und kürzere Winterperioden erwartet, gleichzeitig werden aber ausgedehntere Hitzeperioden in den Sommern mit zunehmender medizinischer Belastung - gerade für ältere und wenig mobile Personen - immer häufiger auftreten. Der winterliche Heizenergiebedarf nimmt also weiter ab, andererseits zeichnet sich ein sommerlicher Grundbedarf für Wohnraumkühlung klar ab: aus Komfort- wie aus medizinischen Gründen.

Der altersgerechte Umbau von Wohnlandschaften und Quartieren im Bestand lässt sich allerdings nicht in wenigen Jahren bewerkstelligen und ebenso auch nicht flächendeckend mit Premiumprodukten der Klimatechnik ausrüsten. "Spontane" Wohnraumklimatisierung gestaltet sich nämlich teuer und zusätzlich energieintensiv, ganz abgesehen von aufwendigen baulichen Maßnahmen für den Einbau neuer technischer Systeme. Andererseits ist der Bedarf für wirkliche Vollklimatisierung über lange Jahresabschnitte in diesen mittleren Breiten noch kaum gegeben, d. h. nur eine Teilklimatisierung - sprich nur moderate Temperaturreduktion in Wohnbereichen im Hochsommer - könnte noch über viele Jahre bis Jahrzehnte entsprechende Bedarfe decken.

Gleichzeitig nimmt die rein bauphysikalische und energetische Sanierung von Wohnraum im Bestand und im Zuge der sogenannten Energiewende Fahrt auf, eine parallele Entwicklung, die mit Sicherheit aufgrund der verbesserten Gebäudehüllenqualität den spezifischen Heizenergiebedarf (pro Wohnfläche) zusätzlich weiter reduzieren wird. Im vergangenen Vierteljahrhundert vom Ende der 1970er bis zum Anfang der 2000er Jahre hatte sich dieser Bedarf um knapp die Hälfte reduziert.

Dies bedeutet insgesamt für die im breiten Bestand weiter vorhandenen klassischen Heizflächen, respektive die relativ großen und leistungsstarken Heizkörper, dass selbige in den nun milderen Heizperioden prinzipiell energetisch günstiger, d. h. im Mittel mit niedrigeren Heizmediumtemperaturen betrieben werden könnten, speziell dann, wenn auch die wärmetechnische Isolation der Gebäudehülle im Zuge von bauphysikalischer Sanierung verbessert wurde. Sie können gewissermaßen zu "Niedrigtemperaturheizkörpern" umgewidmet werden.

Umgekehrt eignet sich damit aber gegebenenfalls eine Vielzahl dieser bestehenden Heizkörperausrüstungen auch für eine moderate Kühlung der Wohnumgebung, sofern sie bei sommerlicher Überwärmung der Gebäudemasse mit einem Kältemedium durchströmt werden können.

Eine solche "Zweckentfremdung" von Standardheizkörpern findet bei längerem Betrieb aber eine natürliche Begrenzung ihrer Untertemperatur zwischen etwa 6 und 10 K, weil eine längere Unterschreitung des Taupunktes, d. h. die subsequente Kondensatbildung auf den Kühlflächen und Rohrleitungen, vermieden werden muss. Dies begrenzt zwar die Menge an effektiv aus der Umgebung abführbarer Wärme erheblich, bedeutet aber nicht, dass innerhalb andauernder sommerlicher Wärmeperioden damit nicht mindestens eine spürbare und nachhaltige Entlastung in ansonsten klassisch beheizten Wohnungen erreicht werden könnte.

Zudem ergeben sich in Verbindung mit regenerativer lokaler Energiegewinnung unter Umständen mehrere Konstellationen, in denen z. B. im Hochsommer überzähliger, eigenerzeugter Photovoltaik-Strom zur Kälteproduktion herangezogen werden - oder gegebenenfalls die Betriebsrichtungen von lokalen Erdwärmepumpen invertiert werden können; letztere, um Erdwärmespeicher während des Sommers mit Wärme aufzuladen, die im darauffolgenden Winter wieder zur Verfügung steht.

Auch wenn solche Prozesse hinsichtlich der Energieeffizienz für sich nicht optimal ablaufen, so kann doch lokal erzeugte Überschussenergie im Sinne der balancierten Ganzjahresbilanz sinnvoll verwendet werden und mit einer moderaten Kühlleistung für den Baukörper im Sommer beitragen. Diese "Hybridverwendung" von Erdwärmespeichern unterstützt in jedem Fall auch deren Nachhaltigkeit, weil Langzeitänderungen der Temperatur in der Speichertiefe dadurch entgegengewirkt wird.

Auf so beschriebene Konstellationen zielt die Ausgestaltung des erfindungsgemäßen HKKV ab, der also speziell darauf ausgelegt ist, im jahreszeitlichen Hybridbetrieb sowohl Heizenergie im Winter und den Übergangsperioden, als auch aufgewendete Kühlenergie im Hochsommer angemessen zu verteilen, und zwar ohne dass zusätzliche Erfassungstechnik notwendig würde.

Allgemein ist festzuhalten, dass die Anwendung eines elektronischen Heizkostenverteilers für umgekehrte Wärmeflüsse in der Praxis keine "Physik-Trivialität" ist. Zu beachten ist nämlich, dass die wärmetechnische Charakterisierung eines elektronischen Heizkostenverteilers mittels der C-Werte (zertifizierte thermische Kopplungskoeffizienten) eine Näherung und Konvention für stationäre Wärmeleitungszustände in Verbindung mit Heizungsbetrieb ist. Da sich speziell die thermisch induzierte Strömungsmechanik in kühlmitteldurchflossenen Heizkörpern aber radikal ändern kann (aber auch nicht notwendig muss), ist die intelligente Benutzung von Heizkostenverteiler-Information, gewonnen an einem eigentlich für Heizenergieabgabe optimierten Messpunkt am Heizkörper, im Einzelfall keine naheliegende oder einfach auszuführende Maßnahme. Das Bewertungsverfahren für die Wärmeübergänge bei Kälteabgabe sowie die angepasste Regelung von Durchfluss und Vorlauftemperatur zur Optimierung der Leistung in Annäherung an den Taupunkt setzen u.a. die Kenntnis und Verwendung spezieller Kalibrierungsfunktionalitäten für bestimmte Heizkörpertypen und -gruppen voraus.

Mit der Erfindung gelingt es, auf geringinvestivem Wege mit bestehender und weit verbreiteter Anlagen- und Messtechnik einen Übergang von reiner Raumbeheizung im Winter zu hybridem Betrieb, d. h. mit moderater Kühlung über die Heizanlage im Sommer und eine entsprechende verbrauchsgerechte Abrechnung zu ermöglichen.

Die im Hinblick auf eine Kostenverteilung notwendigen Berechnungen für die Auswertungen der Messergebnisse können entweder direkt in der Elektronik des HKKV oder - nach einer Übermittlung der Daten an eine externe Recheneinheit - außerhalb des HKKV durchgeführt werden. Im ersten Fall ist die Auswerteeinheit also in einem Gehäuse des Geräts, welches vorzugsweise durch das Rückenteil und der vorderen Gehäuseteil gebildet ist, angeordnet. Im zweiten Fall ist die Auswerteeinheit außerhalb eines Gehäuses des Geräts angeordnet.

Gemäß einem übergeordneten Aspekt der Erfindung ist das elektronische Gerät so eingerichtet, dass es in eine intelligente IT-Infrastruktur (IITI) eingebunden ist und die Messwerte des ersten Temperatursensors dazu verwendet werden, die abwärts gerichtete Annäherung und/oder Regelung der Heiz-/Kühlflächentemperatur (TH) an den durch eine andernorts gemessene Feuchte (e(TL)) ermittelten Taupunkt (THtau) rückgekoppelt zu überwachen.

Das erfindungsgemäße elektronische Gerät ist optional mit einer zusätzlich im Gerät integrierten Feuchtemesseinrichtung mit einem Feuchtesensor ausgestattet. Die Auswerteeinheit ist dabei so eingerichtet, dass die Feuchte an der Raumwand oder der Heiz-/Kühlfläche mathematisch aus der gemessenen Temperatur des ersten Temperatursensors und der gemessenen Temperatur des zweiten Temperatursensors sowie der gemessenen Feuchte bestimmt wird.

Für eine optimale Korrelation der Messergebnisse des zweiten Temperatursensors und des Feuchtesensors sollten diese am besten unmittelbar benachbart zueinander angeordnet sein.

Damit die Feuchte der Raumluft mit ausreichender Genauigkeit gemessen werden kann, ist das vordere Gehäuseteil bevorzugt so ausgebildet, dass, z. B. über eine oder mehrere Öffnungen, eine direkte Strömungsverbindung zwischen der Raumluft und dem Feuchtesensor besteht.

Anstelle eines Feuchtesensors - oder ggf. zusätzlich - kann auch ein im Gerät integrierter Betauungssensor vorgesehen sein, also ein Sensor zur Detektion von einsetzender Kondensation.

Ein solcher Betauungssensor sollte sich dann natürlich an der entsprechenden Fläche befinden, an der die einsetzende Kondensation detektiert werden soll. Am besten sind der erste Temperatursensor und der Betauungssensor unmittelbar benachbart zueinander angeordnet.

Gegenstand der Erfindung ist auch Verfahren zur Erfassung und Verwendung von Raumklimadaten mithilfe eines elektronischen Geräts, wie es oben definiert wurde, wobei das Verfahren folgende Schritte umfasst:
- Messung einer ersten Temperatur (TH) an einer Heiz,- Kühl- oder Neutralfläche;
- Messung einer zweiten Temperatur (TL) an einer von der Fläche beabstandeten Stelle im Raum; und
- Berechnung und Integration von Wärmeabsorptionseinheiten im Intervallbereich TL - TH > 1 K.

Vorzugsweise wird an einer von der Fläche beabstandeten Stelle im elektronischen Gerät eine repräsentative Raumfeuchte gemessen und die Feuchte an der Fläche aus der ersten und der zweiten gemessenen Temperatur (TH, TL) sowie der gemessenen Feuchte (e(TL)) mathematisch bestimmt. Weiter vorzugsweise wird fortlaufend der Taupunkt (THtau) an der Fläche berechnet und sukzessiv eine geeignete taufreie Betriebstemperatur TH=(THtau+x) über eine intelligente IT-Infrastruktur (IITI) an einen rückgekoppelten Ventil-Aktor der Heiz-/Kühlfläche nachgeregelt.

Die Erfindung umfasst demnach ein abgestuftes Verfahren zur Anwendung eines weiterentwickelten elektronischen Heizkostenverteilers (HKKV) zur Verteilung sowohl von Wärme- wie auch Kälteabgabeeinheiten in einem Heiz-/Kühlsystem, mit folgenden, teils optionalen Aspekten:
- Erweiterung eines Standard-Heizkostenverteilers um einen Zusatzalgorithmus zur Zählung von Kälteabgabeeinheiten: TL-TH > 1K;
- Einbindung des HKKV in eine IITI, genauer gesagt Integration in eine IITI mit feuchtegeführter Rückkopplung/Approximation der Kühlflächentemperatur TH an den lokalen Taupunkt THtau (Feuchte extern, TH via HKKV, Stellventil via IITI); ubiquitäres Signal an IITI: Temperaturduo und jeweils Verbrauchsinkremente.
- Auslegung des HKKV mit integriertem eigenen Feuchtesensor, d. h. individualisierte, raumweise Taupunksberechnung/-optimierung; ubiquitäre Signale an IITI: Raumfeuchte, Taupunkt, Sollwert TH, Temperaturduo, Verbrauchsinkremente.
- Messung einer ersten Temperatur THF am thermisch gut leitenden Rückenteil des HKKV;
- Messung einer zweiten Temperatur TRF an der thermisch isolierten Vorderseite des HKKV;
- Messung der Feuchte an einer von dem Rückenteil des HKKV beabstandeten Stelle im HKKV oder Erhebung einer für Wohnung und/oder Wohnraum repräsentativen Feuchte an anderer Stelle innerhalb der IITI;
- mathematische Bestimmung der Taupunkttemperatur TLtau für die angegebene Feuchte; und
- Konditionierung der IITI-Regelung und des Aktors am Drosselventil der Heiz-/Kühlfläche dergestalt, dass TLtau (respektive TLtau +x) als minimaler Sollwert für das einzuregelnde TH festgelegt wird.

Weitere Merkmale und Vorteile der Erfindung ergeben sich aus der nachfolgenden Beschreibung unter Bezugnahme auf die beigefügten Zeichnungen. In der Zeichnung zeigen:
- Figur 1 ein Diagramm mit typischen Wasserdampfdruck-Sättigungslinien;
- Figur 2 eine Schemaskizze eines erfindungsgemäßen elektronischen Geräts in Form eines elektronischen Heizkostenverteilers mit einem Feuchtesensor.
- Figur 3 ein Diagramm, in dem die Kälteleistungsabgabe über dem berechneten Gradienten zwischen Kühloberflächentemperatur und Raumtemperatur (TL-TH) aufgetragen ist.

Wie bereits erwähnt, soll mit der Erfindung ein Übergang von reiner Raumbeheizung im Winter zu hybridem Betrieb, d. h. mit moderater Kühlung über die Heizanlage im Sommer und eine entsprechende verbrauchsgerechte Abrechnung ermöglicht werden. Das normkonforme Zweifühlermessverfahren eines elektronischen Heizkostenverteilers und die Thermodynamik der Wärmeübergänge zwischen Messfläche und Messinstrument bleiben dabei unverändert: Dies betrifft die Erhebung der Messtemperaturen THF (die mit dem Heizkörpertemperaturfühler des elektronischen Heizkostenverteilers gemessene Temperatur), TRF (die mit dem Raumlufttemperaturfühler des elektronischen Heizkostenverteilers gemessene Temperatur) sowie die Berechnung der Temperaturen TH (Heizkörpertemperatur) und TL (Raumlufttemperatur) mittels der zertifizierten thermischen Kopplungskoeffizienten C1 und C2.

Unterschiedlich ausgeführt werden hingegen die mathematisch-physikalischen Bewertungen der gemessenen Temperaturgradienten TH-TL im Hinblick auf die abgegebenen- bzw. aufgenommenen Wärmemengen über die Heizflächen (E: abgegebene bzw. aufgenommene Wärmeenergie):
Es gilt unverändert für den Heizbetrieb:
   - TL-TL >= 5 K: Heizbetrieb gemäß DIN EN 834, dE ∼ (TH-TL)^{1,1}
Weiter:
   - -1 K < TH-TL < 1 K: Definition Neutralzone ohne Betriebszählung, dE = 0
Option gemäß deutschem Patent DE 10 2014 114 646 B4:
   - 1 K <= TH-TL < 5 K: optionale Erfassungssteigerung, dE = konstant Für den Kühlbetrieb gilt:
   - TL-TH > 1 K: Kühlbetrieb (definiertes Saisonintervall), dE ∼ (TL-TH)

Die "Kältezählung" muss sich notwendig von der Heizenergiezählung unterscheiden, da sich die kombinierten thermodynamischen Prozesse der sensiblen und konvektiven Wärmeübertragung von Raumluft zu Heiz- bzw. Kühlflächen signifikant unterscheiden. Insbesondere gilt dies für den "Quasi"-Wegfall von Konvektionswirkungen an moderat abgekühlten Heizkörpern, d. h. eine exponentielle Gewichtung für die Wärmeaufnahme der Heizfläche im Kühlbetrieb entfällt, weil eine gegenüber der Raumluft moderat gekühlte Fläche kaum konvektive Luftbewegungen triggert.

Der HKKV bewertet demnach den registrierten Temperaturgradienten seiner Zweifühlermessung über einen weiter ausgedehnten Bereich von Temperaturszenarien und erhält für die unterschiedlichen Gradienten-Intervalle unterschiedliche Zählalgorithmen zu unterschiedlichen Jahreszeiten.

Generell muss man sich vergegenwärtigen, dass die typischen Kühlleistungen, die mit zweckentfremdeten klassischen Heizanlagen erreichbar sind, weit hinter den winterlichen Heizleistungen zurückbleiben müssen. Zum einen fällt der ausgebildete anwendbare Kühlgradient mit typisch 8 K typischerweise um das 5-fache geringer aus als ein typischer Heizgradient bei exponentieller Gewichtung. Andererseits ist es vorstellbar, dass die Kühlapplikation kontinuierlicher (weil träger und schwächer) über Tage und Wochen aktiv ist - ohne intervallweise Unterbrechungen, die andererseits durch die typischen Raumthermostate im Heizbetrieb üblich sind.

Erwartungsgemäß ist bereits viel gewonnen, wenn die innere Gebäudemasse über Tage bis Wochen um wenige Grad unter demjenigen Niveau gehalten wird, das sich ohne eine solche "Hintergrundkühlung" einstellen würde. In jedem Fall werden den Hitzeereignissen immer die Spitzen gekappt und die Verweildauer beschnitten.

Im Rahmen einer optionalen Feuchtemessung wird zusätzlich angestrebt, in das Kälteverteilungsverfahren eine mögliche Optimierung des Kälteangebots ohne Unterschreitung des Taupunktes zu integrieren. Da im Hochsommer Hitzeperioden von stark unterschiedlicher Luftmassenherkunft herrühren können, kann auch die Luftfeuchte in solchen Perioden stark unterschiedlich ausfallen. Es gilt sinngemäß: Je trockener die Luftmassen, desto effektiver die nachhaltig realisierbare Kühlleistung. Je tropischer (feuchter) die Wärmeperiode, desto begrenzter die Kühlapplikation.

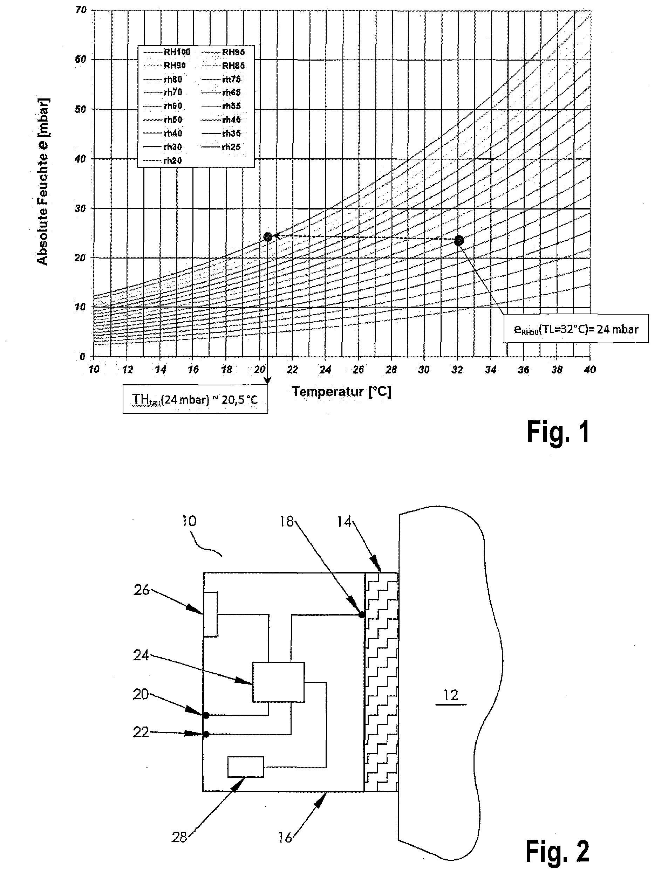

In Figur 1 ist ein Diagramm mit beispielhaften Wasserdampfdruck-Sättigungslinien dargestellt, wobei die absolute Feuchte (y-Achse) gegen die Raumlufttemperatur (x-Achse) aufgetragen ist.

Realisiert wird die letztlich ubiquitäre, durch eine intelligente IT-Infrastruktur (IITI) ausgeführte Applikation durch die Integration einer zusätzlichen Feuchtemessung. Im HKKV ist dies realisierbar durch einen Feuchtesensor, der in unmittelbarer Nähe zum Raumlufttemperaturfühler im vorderen, dem Raum zugewandten, also vom Heizkörper abgewandten Bereich des HKKV angeordnet ist. Man verwendet informatisch dann TL in Verbindung mit der absoluten Raumfeuchte e(TL) (Wasserdampfdruck in mbar).

Das System, respektive auch der einzelne HKKV, errechnet dann direkt die zugehörige Temperatur "THtau", bei der eSat(THtau) = e(TL) gilt, also diejenige Kühlflächentemperatur TH, bei dem der gemessene Wert e(TL) dem Sättigungsdampfdruck entspräche. Bei gegebener Vorlaufkühltemperatur muss dann die IITI den rückgekoppelten Aktor eines Drosselventils der Heiz-/Kühlfläche so steuern, dass die effektive Heizkörpertemperatur TH kurz oberhalb der errechneten Temperatur THtau verbleibt. (THtau + x) ist also der Sollwert für TH (x ist ein Sicherheitsaufschlag).

Im einfachen Fall funktioniert die oben erläuterte Steuerung entweder basierend auf einer einzelnen zentralen Feuchtemessung repräsentativ für die Wohnung oder das Gebäude und als Dienst der IITI, im avancierten Fall für jeden einzelnen Raum separat, d. h. als integrierte Funktionalität des HKKV, der dazu mit einem individuellen Feuchtesensor ausgestattet ist.

Ein solcher HKKV inklusive Feuchtesensor ist allerdings um gut ein Drittel teurer als ein Standard-HKKV, bietet jedoch im Hinblick auf zusätzliche Virtualisierung seines Feuchtesensors natürlich noch weitere Funktionalitäten innerhalb der IITI (Bundle innerhalb eines OSGi-Frameworks), z. B. bei einem unabhängig laufenden Feuchte-Monitoring-Dienst, sofern im Kontext der IITI dafür ein Bedarf besteht.

In Figur 2 ist ein erfindungsgemäßes elektronisches Gerät 10 zur Erfassung von Raumklimadaten dargestellt, das an einer Oberfläche 12, insbesondere an einer Heiz-/Kühlfläche oder an einer Wand eines Raumes angebracht ist. Grundsätzlich kann das Gerät 10 an einer beliebigen Stelle angebracht sein; sinnvoll ist jedoch - wie oben bereits erläutert - eine Oberfläche 12 im Raum, die für das Raumklima von besonderer Bedeutung ist.

Das Gerät 10 hat ein Rückenteil 14, mit dem es an der Oberfläche 12 angebracht ist. Das Rückenteil 14 ist vorzugsweise ein Standard-Rückenteil, wie es bei Heizkostenverteilern verwendet wird. Auf das Rückenteil 14 ist ein vorderes Gehäuseteil 16 montiert, das in den Raum hineinragt. Das vordere Gehäuseteil 16 und das Rückenteil 14 bilden somit insgesamt ein weitgehend geschlossenes Gehäuse.

Am Rückenteil 14 ist ein erster Temperatursensor 18 einer Temperaturmesseinrichtung angeordnet, der zur Messung der Temperatur der Wand- bzw. der konkreten Oberfläche 12, an der das Gerät 10 angebracht ist, vorgesehen ist. Ein zweiter Temperatursensor 20 der Temperaturmesseinrichtung ist im vorderen Gehäuseteil 16 angeordnet, vorzugsweise an der vom Rückenteil 14 abgewandten und dem Raum zugewandten Seite des Gehäuseteils 16.

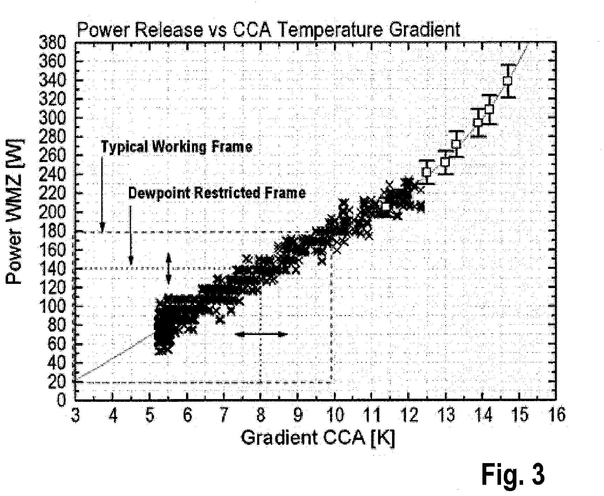

Figur 3 verdeutlicht exemplarisch jenen Sachverhalt, wie das "Nutzsignal" eines gemäß DIN EN 834 an einem Heizkörper positionierten HKKV, nämlich der berechnete Gradient zwischen Kühloberflächentemperatur und Raumtemperatur, (TL-TH), funktional typisch mit der - zur Kalibration kalorisch mittels Wärmemengenzähler gemessenen - Kälteleistungsabgabe zusammenhängt.

Entsprechend der physikalischen Erwartung ergibt sich ein über weite Strecken linear approximierbarer Zusammenhang. Die Qualität des HKKV-Messsignals, oder anders gesagt die "Güte" der thermischen Ankopplung an das Kühlmedium, ist umso ausgeprägter, je niedriger und je weiter rechts sich eine solche Kalibrationskurve in dem in Figur 3 dargestellten Diagramm wiederfindet.

Bei geeigneter Kalibration und im Besonderen für die relativ niedrigen zu erwartenden Kälteabgabeleistungen eignet sich ein HKKV sogar relativ gut für eine grobe Quantifizierung der abgegebenen Kälte, denn das zu messende Temperatursignal liegt bei einem HKKV typischerweise fast eine Größenordnung höher als bei Wärmemengenzählern. Daraus ergeben sich allgemein geringere Anforderungen an die Güte der Temperaturmessungen und damit ein geringerer finanzieller Aufwand. Die wirtschaftliche Darstellbarkeit im Kontrast zu kalorischer Messung mit Wärmemengenzählern sowie der allgemein sehr viel unkompliziertere Praxiseinsatz machen daher die Motivation zur Etablierung von HKKVs als Kombinationsinstrument zur Kälteabgaberegistrierung und Unterstützung der Kälteabgabesteuerung in moderaten Mengen und im bestehenden Heizanlagenbestand aus.

Optional umfasst das Gerät 10 eine Feuchtemesseinrichtung mit einem Feuchtesensor 22, der in unmittelbarer Nähe des zweiten Temperatursensors 20 angeordnet ist. Ziel ist es nämlich, mit dem zweiten Temperatursensor 20 und dem Feuchtesensor 22 die Temperatur und die Feuchte möglichst an der gleichen Stelle zu messen. Diese Stelle soll repräsentativ für die Raumluft sein, weshalb diese beiden Sensoren 20, 22 (innerhalb des Geräts 10) möglichst weit von der Oberfläche 12 und vom ersten Temperatursensor 18 beabstandet sein sollen (in der Praxis sind dies je nach Gehäusedimension einige Millimeter).

Damit die Feuchte der Raumluft mit ausreichender Genauigkeit gemessen werden kann, ist das vordere Gehäuseteil 16 so ausgebildet, dass z. B. über eine oder mehrere Öffnungen eine direkte Strömungsverbindung zwischen der Raumluft und dem Feuchtesensor 22 besteht.

Um nun die Feuchte an der Wand 12 zu bestimmen, werden die von den drei Sensoren 18, 20, 22 gemessenen Werte einer Auswerteeinheit 24 mit einem Mikrocontroller oder einer vergleichbaren Elektronik zugeführt. Aus der vom ersten Temperatursensor 18 gemessenen Flächentemperatur und der vom zweiten Temperatursensor 20 gemessenen Raumtemperatur sowie der vom Feuchtesensor 22 gemessenen Raumfeuchte wird die Wandfeuchte (relative Feuchte an der Wand) gemäß physikalischer Grundlagen mathematisch berechnet wie nachfolgend erläutert.

Für die mathematische Berechnung der Feuchte e(TH) an der Fläche 12 werden empirisch ermittelte Exponentialfunktionen Ps für den Wasserdampfsättigungsdampfdruck über Wasser bzw. Eis (Psw, Psi) in den interessierenden Temperaturbereichen verwendet (vgl. Figur 1).

Das Verhältnis der Sättigungsdampfdrucke ergibt sich durch Anwendung der oben referenzierten empirischen Formeln für den Wasserdampfdruck über Wasser bzw. Eis.

Die vom elektronischen Gerät 10 erfassten Messwerte und die im Gerät 10 mathematisch berechneten Werte können u. a. auf einer Anzeigeeinrichtung 26 (Display) ausgegeben werden. Zum Ablesen/Verarbeiten dieser Daten (wie bei einem elektronischen Heizkostenverteiler) können die Daten entweder von Hand notiert, per Infrarotschnittstelle über kurze Entfernung auf einen mobilen Empfänger übertragen oder per Funk über eine größere Entfernung an einen zentralen Empfänger übermittelt werden. Für die Funkübertragung weist das Gerät 10 eine auf den zentralen Empfänger abgestimmte Sendeeinrichtung 28 auf. Die Intervalle zwischen den einzelnen Datenübermittlungen an den zentralen Empfänger können variieren, je nach angebotener Dienstleistung.

Optional umfasst das elektronische Gerät 10 noch eine Warneinrichtung (nicht dargestellt), die einen Hinweis ausgibt, wenn die gemessene erste Temperatur (Flächentemperatur) eine im Gerät 10 berechnete kritische Temperatur über- oder unterschreitet. Die kritische Temperatur kann insbesondere mit dem Taupunkt an der Fläche 12 in Beziehung stehen, d. h. bei Annäherung der Flächentemperatur an den Taupunkt wird dem Verbraucher vom Gerät 10 ein Warnhinweis gegeben. Um eine weitergehende Analyse zu ermöglichen, kann die Warneinrichtung auch die Zeitintervalle der Temperaturüberschreitung bzw. -unterschreitung aufintegrieren.

Dieselbe und/oder eine andere Warneinrichtung im Gerät 10 kann zusätzlich dafür vorgesehen sein, einen Hinweis auszugeben, wenn die gemessene Feuchte (Raumfeuchte) oder die mathematisch bestimmte Feuchte (Flächenfeuchte) eine vorgegebene kritische Feuchte über- oder unterschreitet. Die Zeitintervalle der Feuchteüber- bzw. -unterschreitung können wiederum aufintegriert werden.

Anstelle des Feuchtesensors 22 - oder zusätzlich - kann auch ein Betauungssensor (nicht dargestellt) vorgesehen sein. Der Betauungssensor ist im Gegensatz zum Feuchtesensor 22 nicht vorne, sondern hinten im Gerät 10, also am Rückenteil 14 angeordnet, möglichst in unmittelbarer Nähe des ersten Temperatursensors 20, wo eine gute thermische Leitfähigkeit vom Sensor über das Rückenteil 14 zur Fläche 12 gegeben ist.

### Bezugszeichenliste

- 10: Feuchtesensor
- 12: Heiz-/Kühlfläche oder Coldspot-Messstelle (Wand)
- 14: Rückenteil
- 16: vorderes Gehäuseteil
- 18: erster Temperatursensor (THF)
- 20: zweiter Temperatursensor (TRF)
- 22: Feuchtesensor
- 24: Auswerteeinheit
- 26: Anzeigeeinrichtung
- 28: Sendeeinrichtung

## Patentansprüche

1. Elektronisches Gerät (10) zur Erfassung von Raumklimadaten in einem mit einer Heiz-/Kühlfläche (12) ausgestattetem Raum, mit
einem Rückenteil (14) zur Anbringung des Geräts (10) an einer Raumwand oder der Heiz-/Kühlfläche (12),
einem vorderen Gehäuseteil (16), das im angebrachten Zustand des Geräts (10) in den Raum hineinragt, und
einer Temperaturmesseinrichtung, wobei die Temperaturmesseinrichtung einen am Rückenteil (14) angeordneten ersten Temperatursensor (18) zur Messung einer ersten Temperatur und einen im vorderen Gehäuseteil (16) angeordneten zweiten Temperatursensor (20) zur Messung einer zweiten Temperatur aufweist,
**dadurch gekennzeichnet, dass** das elektronische Gerät (10) ferner eine Auswerteeinheit (24) umfasst und so eingerichtet ist, dass die Auswerteeinheit (24) mithilfe der Temperaturmesseinrichtung nur bei einem Kühlbetrieb der Heiz-/Kühlfläche (12), bei dem die Heiz-/Kühlfläche (12) von einem Kühlmittel durchflossen wird und die Differenz zwischen der vom zweiten Temperatursensor (20) und der vom ersten Temperatursensor (18) gemessenen Temperatur größer 1 K ist (TL-TH > 1 K), die anfallenden Wärmeabsorptionseinheiten zählt bzw. errechnet und aufintegriert, wobei die Wärmeabsorptionseinheiten zu einer Funktion dieser Differenz proportional sind (dE ∼ f(TL-TH)).

2. Elektronisches Gerät (10) nach Anspruch 1, **dadurch gekennzeichnet, dass** die Auswerteeinheit (24) in einem Gehäuse des Geräts (10), welches vorzugsweise durch das Rückenteil (14) und den vorderen Gehäuseteil (16) gebildet ist, angeordnet ist.

3. Elektronisches Gerät (10) nach Anspruch 1, **dadurch gekennzeichnet, dass** die Auswerteeinheit (24) außerhalb eines Gehäuses des Geräts (10) angeordnet ist.

4. Elektronisches Gerät (10) nach einem der vorhergehenden Ansprüche, **dadurch gekennzeichnet, dass** das elektronische Gerät (10) so eingerichtet ist, dass es in eine intelligente IT-Infrastruktur eingebunden ist und die Messwerte des ersten Temperatursensors (18) dazu verwendet werden, die abwärts gerichtete Annäherung und/oder Regelung der Heiz-/Kühlflächentemperatur (TH) an den durch eine andernorts gemessene Feuchte (e(TL)) ermittelten Taupunkt (THtau) rückgekoppelt zu überwachen.

5. Elektronisches Gerät (10) nach einem der vorhergehenden Ansprüche, **gekennzeichnet durch** eine zusätzlich im Gerät integrierte Feuchtemesseinrichtung mit einem Feuchtesensor (22), wobei die Auswerteeinheit (24) so eingerichtet ist, dass die Feuchte an der Raumwand oder der Heiz-/Kühlfläche (12) mathematisch aus der gemessenen Temperatur des ersten Temperatursensors (18) und der gemessenen Temperatur des zweiten Temperatursensors (20) sowie der gemessenen Feuchte bestimmt wird.

6. Elektronisches Gerät (10) nach Anspruch 5, **dadurch gekennzeichnet, dass** der zweite Temperatursensor (20) und der Feuchtesensor (22) unmittelbar benachbart zueinander angeordnet sind.

7. Elektronisches Gerät (10) nach Anspruch 5 oder 6, **dadurch gekennzeichnet, dass** das vordere Gehäuseteil (16) so ausgebildet ist, dass eine direkte Strömungsverbindung zwischen der Raumluft und dem Feuchtesensor (22) besteht.

8. Elektronisches Gerät (10) nach einem der vorhergehenden Ansprüche, **gekennzeichnet durch** einen im Gerät integrierten Betauungssensor.

9. Elektronisches Gerät (10) nach Anspruch 8, **dadurch gekennzeichnet, dass** der erste Temperatursensor (20) und der Betauungssensor unmittelbar benachbart zueinander angeordnet sind.

10. Verfahren zur Erfassung und Verwendung von Raumklimadaten mithilfe eines elektronischen Geräts (10) nach einem der vorhergehenden Ansprüche, wobei das Verfahren folgende Schritte umfasst:
- Messung einer ersten Temperatur (TH) an einer Heiz,- Kühl- oder Neutralfläche (12);
- Messung einer zweiten Temperatur (TL) an einer von der Fläche (12) beabstandeten Stelle im Raum; und
- Berechnung und Integration von Wärmeabsorptionseinheiten im Intervallbereich TL - TH > 1 K.

11. Verfahren nach Anspruch 10, **dadurch gekennzeichnet, dass** an einer von der Fläche (12) beabstandeten Stelle im elektronischen Gerät (10) eine repräsentative Raumfeuchte gemessen und die Feuchte an der Fläche (12) aus der ersten und der zweiten gemessenen Temperatur (TH, TL) sowie der gemessenen Feuchte (e(TL)) mathematisch bestimmt wird, und dass fortlaufend der Taupunkt (THtau) an der Fläche (12) berechnet und sukzessiv eine geeignete taufreie Betriebstemperatur TH=(THtau+x) über eine intelligente IT-Infrastruktur an einen rückgekoppelten Ventil-Aktor der Heiz-/Kühlfläche nachgeregelt wird.

12. Verwendung eines elektronischen Geräts (10) nach einem der Ansprüche 1 bis 9, das als elektronischer Heizkostenverteiler ausgebildet und eingerichtet ist, im Winter für eine Heizkostenverteilung, insbesondere in einem Betrieb nach DIN 834, und im Sommer für eine Kühlkostenverteilung basierend auf einer Zählung bzw. Berechnung und Integration von Wärmeabsorptionseinheiten, die proportional zu einer von der Differenz zwischen der vom zweiten Temperatursensor (20) und der vom ersten Temperatursensor (18) gemessenen Temperatur (TL-TH) abhängigen Funktion sind (dE ∼ f(TL-TH)).

## Claims

1. An electronic apparatus (10) for acquiring indoor climate data in a room equipped with a heating/cooling surface (12), comprising
a rear part (14) for mounting the apparatus (10) to a room wall or the heating/cooling surface (12),
a housing front part (16) which projects into the room in the mounted state of the apparatus (10), and
a temperature measuring device, the temperature measuring device including a first temperature sensor (18) for measuring a first temperature, which is arranged on the rear part (14), and a second temperature sensor (20) for measuring a second temperature, which is arranged in the housing front part (16),
**characterized in that** the electronic apparatus (10) further comprises an evaluation unit (24) and is configured such that the evaluation unit (24), with the aid of the temperature measuring device, counts and/or calculates and integrates the accruing heat absorption units only in a cooling operation of the heating/cooling surface (12) in which a coolant flows through the heating/cooling surface (12) and the difference between the temperature measured by the second temperature sensor (20) and that measured by the first temperature sensor (18) is greater than 1 K (TL-TH > 1 K), the heat absorption units being proportional to a function of this difference (dE ∼ f(TL-TH)).

2. The electronic apparatus (10) according to claim 1, **characterized in that** the evaluation unit (24) is arranged in a housing of the apparatus (10), which is preferably formed by the rear part (14) and the housing front part (16).

3. The electronic apparatus (10) according to claim 1, **characterized in that** the evaluation unit (24) is arranged outside a housing of the apparatus (10).

4. The electronic apparatus (10) according to any of the preceding claims, **characterized in that** the electronic apparatus (10) is configured such that it is incorporated in an intelligent IT infrastructure and the measured values of the first temperature sensor (18) are used for feedback monitoring of the downward directed approximation and/or closed-loop control of the heating/cooling surface temperature (TH) to the dew point (THtau) as determined by a humidity (e(TL)) measured at a different place.

5. The electronic apparatus (10) according to any of the preceding claims, **characterized by** a humidity measuring device additionally integrated in the apparatus and having a humidity sensor (22), the evaluation unit (24) being configured such that the moisture on the room wall or on the heating/cooling surface (12) is determined mathematically from the measured temperature of the first temperature sensor (18) and the measured temperature of the second temperature sensor (20) and the measured humidity.

6. The electronic apparatus (10) according to claim 5, **characterized in that** the second temperature sensor (20) and the humidity sensor (22) are arranged directly adjacent to each other.

7. The electronic apparatus (10) according to claim 5 or 6, **characterized in that** the housing front part (16) is formed such that a direct fluid communication exists between the room air and the humidity sensor (22).

8. The electronic apparatus (10) according to any of the preceding claims, **characterized by** a condensation sensor integrated in the apparatus.

9. The electronic apparatus (10) according to claim 8, **characterized in that** the first temperature sensor (20) and the condensation sensor are arranged directly adjacent to each other.

10. A method of acquiring and using indoor climate data with the aid of an electronic apparatus (10) according to any of the preceding claims, the method comprising the following steps:
- measuring a first temperature (TH) at a heating, cooling or neutral surface (12);
- measuring a second temperature (TL) at a place in the room spaced apart from the surface (12); and
- calculating and integrating heat absorption units in the interval range TL - TH > 1 K.

11. The method according to claim 10, **characterized in that** a representative room humidity is measured at a point spaced apart from the surface (12) in the electronic apparatus (10) and the moisture on the surface (12) is determined mathematically from the first and second measured temperatures (TH, TL) and the measured humidity (e(TL)), and **in that** the dew point (THtau) on the surface (12) is continuously calculated and a suitable dew-free operating temperature TH=(THtau+x) is successively readjusted by means of an intelligent IT infrastructure to a feedback valve actuator of the heating/cooling surface.

12. Use of an electronic apparatus (10) according to any of claims 1 to 9, which is formed and configured as an electronic heat cost allocator, in winter for a heating cost allocation, in particular in an operation according to DIN 834, and in summer for a cooling cost allocation based on a counting and/or calculation and integration of heat absorption units which are proportional to a function (dE ∼ f(TL-TH)) dependent on the difference between the temperature (TL-TH) measured by the second temperature sensor (20) and that measured by the first temperature sensor (18).

## Revendications

1. Dispositif électronique (10) pour la saisie de données de climat ambiant d'une pièce équipée d'une surface de chauffage/de refroidissement (12), comprenant
une partie arrière (14) pour le montage du dispositif (10) sur un mur de la pièce ou sur la surface de chauffage/de refroidissement (12),
une partie de boîtier avant (16) qui fait saillie dans la pièce à l'état monté du dispositif (10), et
un moyen de mesure de température, le moyen de mesure de température présentant un premier capteur de température (18) agencé sur la partie arrière (14) pour mesurer une première température, et un deuxième capteur de température (20) agencé dans la partie de boîtier avant (16) pour mesurer une deuxième température,
**caractérisé en ce que** le dispositif électronique (10) comprend en outre une unité d'évaluation (24) et est réalisé de telle sorte que l'unité d'évaluation (24) compte ou calcule ou intègre les unités d'absorption de chaleur produites à l'aide du moyen de mesure de température uniquement dans un mode de refroidissement de la surface de chauffage/de refroidissement (12), dans lequel un fluide de refroidissement circule à travers la surface de chauffage/de refroidissement (12) et la différence entre la température mesurée par le deuxième capteur de température (20) et la température mesurée par le premier capteur de température (18) est supérieure à 1 K (TL - TH > 1 K), les unités d'absorption de chaleur étant proportionnelles à une fonction de cette différence (dE ∼ f(TL - TH)).

2. Dispositif électronique (10) selon la revendication 1, **caractérisé en ce que** l'unité d'évaluation (24) est agencée dans un boîtier du dispositif (10) qui est de préférence formé par la partie arrière (14) et la partie de boîtier avant (16).

3. Dispositif électronique (10) selon la revendication 1, **caractérisé en ce que** l'unité d'évaluation (24) est agencée à l'extérieur d'un boîtier du dispositif (10).

4. Dispositif électronique (10) selon l'une des revendications précédentes, **caractérisé en ce que** le dispositif électronique (10) est réalisé de manière à être intégré dans une infrastructure informatique intelligente et les valeurs mesurées du premier capteur de température (18) sont utilisées pour la surveillance par rétroaction de l'approximation dirigée vers le bas et/ou le réglage de la température (TH) de la surface de chauffage/de refroidissement au point de condensation (THtau) déterminé par une humidité (e(TL)) mesurée à un autre endroit.

5. Dispositif électronique (10) selon l'une des revendications précédentes, **caractérisé par** un moyen de mesure d'humidité en outre intégré dans le dispositif et comportant un capteur d'humidité (22), l'unité d'évaluation (24) étant réalisée de telle sorte que l'humidité sur le mur de la pièce ou sur la surface de chauffage/de refroidissement (12) est déterminée mathématiquement à partir de la température mesurée du premier capteur de température (18) et de la température mesurée du deuxième capteur de température (20) et de l'humidité mesurée.

6. Dispositif électronique (10) selon la revendication 5, **caractérisé en ce que** le deuxième capteur de température (20) et le capteur d'humidité (22) sont agencés directement l'un à côté de l'autre.

7. Dispositif électronique (10) selon la revendication 5 ou 6, **caractérisé en ce que** la partie de boîtier avant (16) est réalisée de telle sorte qu'il existe une liaison fluidique directe entre l'air ambiant et le capteur d'humidité (22).

8. Dispositif électronique (10) selon l'une des revendications précédentes, **caractérisé par** un capteur de condensation intégré dans le dispositif.

9. Dispositif électronique (10) selon la revendication 8, **caractérisé en ce que** le premier capteur de température (20) et le capteur de condensation sont agencés directement l'un à côté de l'autre.

10. Procédé de saisie et d'utilisation de données de climat ambiant au moyen d'un dispositif électronique (10) selon l'une des revendications précédentes, le procédé comprenant les étapes suivantes :
- mesure d'une première température (TH) sur une surface de chauffage, de refroidissement ou neutre (12) ;
- mesure d'une deuxième température (TL) à un endroit de la pièce éloigné de la surface (12) ; et
- calcul et intégration d'unités d'absorption de chaleur dans la plage d'intervalle TL - TH > 1 K.

11. Procédé selon la revendication 10, **caractérisé en ce qu'**une humidité ambiante représentative est mesurée à un endroit éloigné de la surface (12) dans le dispositif électronique (10) et l'humidité sur la surface (12) est déterminée mathématiquement à partir de la première et de la deuxième température mesurée (TH, TL) et de l'humidité mesurée (e(TL)), et **en ce que** le point de condensation (THtau) de la surface (12) est calculé en continu et une température de fonctionnement appropriée sans condensation TH = (THtau + x) est successivement réajustée par une infrastructure informatique intelligente à un actionneur de vanne de rétroaction de la surface de chauffage/refroidissement.

12. Utilisation d'un dispositif électronique (10) selon l'une des revendications 1 à 9, lequel est réalisé et aménagé sous forme de répartiteur électronique de frais de chauffage, en hiver pour une répartition des frais de chauffage, en particulier dans un fonctionnement selon la norme DIN 834, et en été pour une répartition des frais de refroidissement sur la base d'un comptage ou calcul et d'une intégration d'unités d'absorption de chaleur qui sont proportionnelles à une fonction (dE ∼ f(TL-TH)) dépendant de la différence (TL - TH) entre la température mesurée par le deuxième capteur de température (20) et la température mesurée par le premier capteur de température (18).
